# EUROPÄISCHE PATENTANMELDUNG

(11) **EP 1 782 871 A1**
(43) Veröffentlichungstag der Anmeldung: **09.05.2007**
(21) Anmeldenummer: 06023008.3
(22) Anmeldetag: 06.11.2006
(51) Int. Cl.: B01D 29/01, B21D 31/02

(54) **Verfahren zur Herstellung eines Oberflächenfilters und damit gefertigter Oberflächenfilter**

(30) Priorität: 08.11.2005 DE 102005053163
(71) Anmelder: Paul GmbH & Co. KG, 36396 Steinau (DE)
(72) Erfinder: Ruppel, Peter, Wilhelm, 36396 Steinau (DE); Zöllner, Udo, Artur, 92369 Sengenthal (DE); Hahn, Mark, 93637 Weiden (DE)
(74) Vertreter: Hübner, Gerd

(57) **Zusammenfassung**

Ein Verfahren zur Herstellung eines Oberflächenfilters weist folgende Verfahrensschritte auf:
- Bereitstellen eines Blechrohlings (1) aus einem korrosionsbeständigen Metall, insbesondere aus Chrom-Nickel-Stahl,
- Einbringen von Primäröffnungen (4) in den Blechrohling (1) durch mechanisches Perforieren,
- thermisches Behandeln des perforierten Blechrohlings (1),
- und Walzen des perforierten Blechrohlings (1) zur Verkleinerung der Primäröffnungen (4) zu Filterporen (5) oder Restöffnungen (7) einer Öffnungsweite (f) von unter 1 µm.

## Beschreibung

Die Erfindung betrifft ein Verfahren zur Herstellung eines Oberflächenfilters sowie einen danach gefertigten Oberflächenfilter, insbesondere zur Anwendung in der Getränkeindustrie beispielsweise für die Bierfiltration.

Der Hintergrund der Erfindung soll am Beispiel von Filterprozessen in der Getränkeindustrie, insbesondere bei der Bierherstellung, erläutert werden. So erfolgt die Klarfiltration des Bieres am Ende des Brauprozesses derzeit praktisch ausschließlich mit Hilfe der sogenannten Kieselgur-Anschwemmfiltration. Dabei wird dem sogenannten Unfiltrat, das heißt dem Getränk (insbesondere Bier) vor der Filtration in einen Zustand, in dem es noch Hefe und Trübungsstoffe enthält, Kieselgur beigemischt, welches sich an den Oberflächen der Filterkerzen als Filterschicht aufbaut und eine entsprechende Klarfiltration des Getränks bewirkt.

Die vorstehende Filtermethode ist mit erheblichen Nachteilen behaftet. So ergibt sich eine große Wasservermischung des Produkts beim An- und Abfahren der Filteranlagen. Der mit dem Filtermedium erreichbare Trenngrad ist nur in begrenztem Umfang definiert. Ferner entstehen große Mengen an Kieselgurschlämmen - ca. 150.000 Tonnen pro Jahr allein in Deutschland - die als Abfallstoff kostenintensiv entsorgt werden müssen.

Ein Ansatzpunkt zur Lösung dieser Problematik ist die sogenannte Membranfiltration, bei der das Filtrat durch Mikroporen in der Membran hindurchtritt und die abzuscheidenden Stoffe darauf zurückbleiben. Hierbei sind Stoffe bis weit unter 1 µm Partikeldurchmesser abfiltrierbar.

Problematisch bei der Membranfiltration ist der sehr hohe Energieaufwand, da das Unfiltrat in der Regel unter hohem Druck durch den Membranfilter gepresst wird. Ferner ist eine kostenintensive und aufwändige Reinigung und Rückspülung der verwendeten Membranen notwendig, da diese in der Regel auf dem Prinzip der Tiefenfiltration beruhen. Dabei setzen sich die zurückzuhaltenden Stoffe im Querschnitt der verwendeten Membran fest, was eine Regeration mit Hilfe von heißen, oft ätzenden Lösungen, wie beispielsweise Natronlauge, erforderlich macht. Für derartige Rückspülungen ist eine Unterbrechung des Filtrationsprozesses in einer Größenordnung von mindestens 30 Minuten erforderlich.

Bekannt ist im Zusammenhang mit dem Aufbau des Filterkuchens auf der Membranoberfläche eine Verzögerung, in dem die Membran mit seismischen Schwingungen beaufschlagt wird. Der Filterkuchen wird dadurch aufgelockert bzw. abgesprengt, was die Zykluszeit für die Rückspülung der Membran deutlich verlängert. Überflüssig wird das Rückspülen jedoch nicht, da ansonsten ein Verblocken der Membranporen nicht zu verhindern wäre.

Ausgehend von den geschilderten Problemen des Standes der Technik liegt nun der Erfindung die Aufgabe zugrunde, ein Verfahren zur einfachen und kostengünstigen Herstellung eines nach dem Prinzip der Oberflächenfiltration arbeitenden Filters zu schaffen, der eine Filterfeinheit im Sub-Mikrometer-Bereich aufweist.

Diese Aufgabe wird durch die folgenden erfindungsgemäßen Verfahrensschritte gemäß Anspruch 1 gelöst:
- Bereitstellen eines Blechrohlings aus einem korrosionsbeständigen Metall, insbesondere aus Chrom-Nickel-Stahl,
- Einbringen von Primäröffnungen in den Blechrohling durch mechanisches Perforieren,
- thermisches Behandeln des perforierten Blechrohlings, und
- Walzen des perforierten Blechrohlings zur Verkleinerung der Primäröffnungen zu Filterporen oder Restöffnungen einer Öffnungsweite von unter 1 µm.

Das erfindungsgemäße Fertigungsverfahren beruht auf einem extrem einfachen Material, nämlich korrosionsbeständigen Blechrohlingen, insbesondere aus Chrom-Nickel-Stahl, wie sie als industrielles Standardmaterial auf breiter Front verfügbar sind. Darauf basierend genügen zur Herstellung des Filters sehr einfache Fertigungsschritte mechanischer und thermischer Natur, nämlich einerseits das Perforieren und Walzen des Blechrohlinges unter Zwischenschaltung einer thermischen Behandlung vorzugsweise in Form eines Weichglühens insbesondere bei etwa 1050°C. Die Perforation des Blechrohlings erfolgt dabei durch eine Dornenwalze, die sogenannte Primäröffnungen in den Blechrohling mit einer lichten Weite zwischen etwa 0,010 mm und 0,090 mm einbringt.

Nach dem anschließenden Weichglühen des perforierten Blechrohlings wird dieser in üblichen Walzpressen gegebenenfalls mehrmals mit variierenden Walzkräften gewalzt, wodurch die großen Primäröffnungen auf eine Öffnungsweite von deutlich unter 1 µm umgeformt werden.

Falls notwendig, kann der so behandelte Blechrohling einem chemischen Abtragungsprozess, insbesondere einer elektrolytischen Entgratung oder einem Beizen unterworfen werden. Diese Behandlungsverfahren greifen bevorzugt an den Mikrofilterporen an und sorgen für eine definierte Aufweitung der Filterporen auf das gewünschte Maß im Sub-Mikrometer-Bereich.

Mit einem Oberflächenfilter, der mit dem erfindungsgemäßen Verfahren hergestellt wurde und Filterporen mit einer Öffnungsweite von unter 1 µm aufweist, lassen sich insbesondere im Zusammenhang mit der Bierfiltration vielfache Vorteile erzielen. So können jegliche Filterhilfsmittel, wie Kieselgur oder Zellulose entfallen. Im Zusammenhang mit Kieselgur werden damit die vorhandenen Ressourcen geschont.

Der bisher in der Regel als Abfallstoff zu entsorgende Filterschlamm fällt nicht mehr an, vielmehr stellt der bei der Oberflächenfiltration mit Hilfe des erfindungsgemäßen Filters zurückbleibende Filterkuchen einen als Futtermittel verwendbaren Wertstoff dar. Insgesamt werden dabei allein in Deutschland jährlich bis zu 150.000 m³ Deponievolumen eingespart.

Im Hinblick auf die im Vergleich zu einer Membranfiltration entfallenden Reinigungsschritte werden durch den erfindungsgemäßen Oberflächenfilter umweltbelastende Reinigungsmedien, wie konzentrierte Natronlauge oder Schwefelsäure, drastisch reduziert, wenn nicht gar gänzlich eliminiert. Damit wird eine erhebliche Einsparung von Prozesswasser durch einen kontinuierlichen Anlagenbetrieb erzielt.

Weitere Merkmale, Vorteile und Einzelheiten des erfindungsgemäßen Verfahrens und der damit hergestellten Oberflächenfilter werden aus der nachfolgenden Beschreibung deutlich, in der ein Ausführungsbeispiel des Herstellungsverfahrens anhand der beigefügten Zeichnungen näher erläutert wird. Es zeigen:
- Fig. 1: einen schematischen, stark vergrößerten Schnitt durch einen Blechrohling in einem ersten Fertigungszwischenschritt und
- Fig. 2 bis 4: gegenüber Fig. 1 nochmals vergrößerte, schematische Detailschnitte durch den Blechrohling in weiteren Fertigungszwischenschritten.

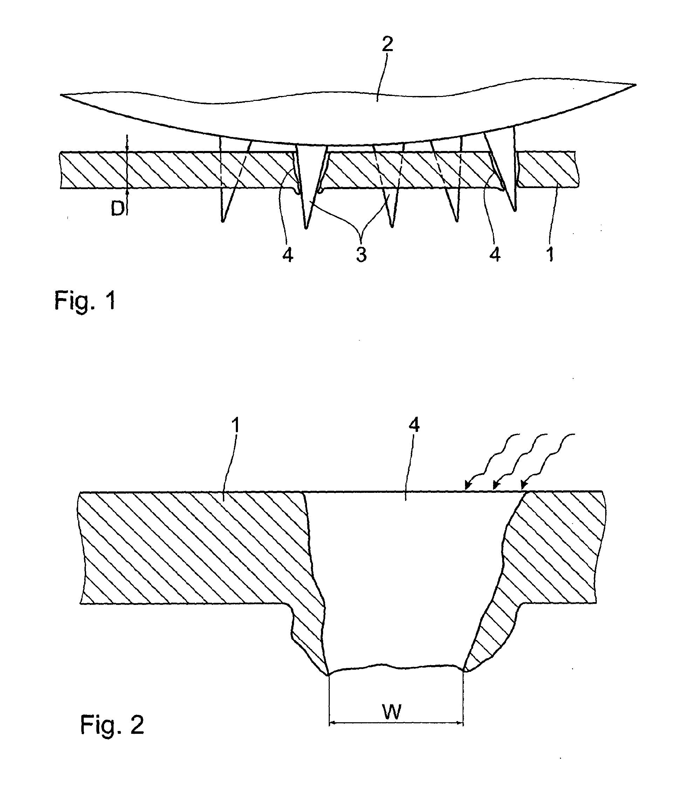

Wie aus Figur 1 deutlich wird, geht das Herstellungsverfahren von einem Blechrohling 1 aus Chrom-Nickel-Stahl aus, der eine Dicke D von beispielsweise etwa 0,05 mm aufweist. Dieser Blechrohling 1 wird mit Hilfe einer Dornenwalze 2 mechanisch perforiert. Die Domen 3 sind dabei so beschaffen, dass im Blechrohling 1 in dessen Dickenrichtung durchgehende Primäröffnungen 4 eingestochen werden, die eine Weite W im Sub-Millimeter-Bereich von etwa 0,010 mm bis 0,090 mm aufweisen. Pro cm² werden ca. 60 bis 80 dieser Primäröffnungen 4 in den Blechrohling eingebracht.

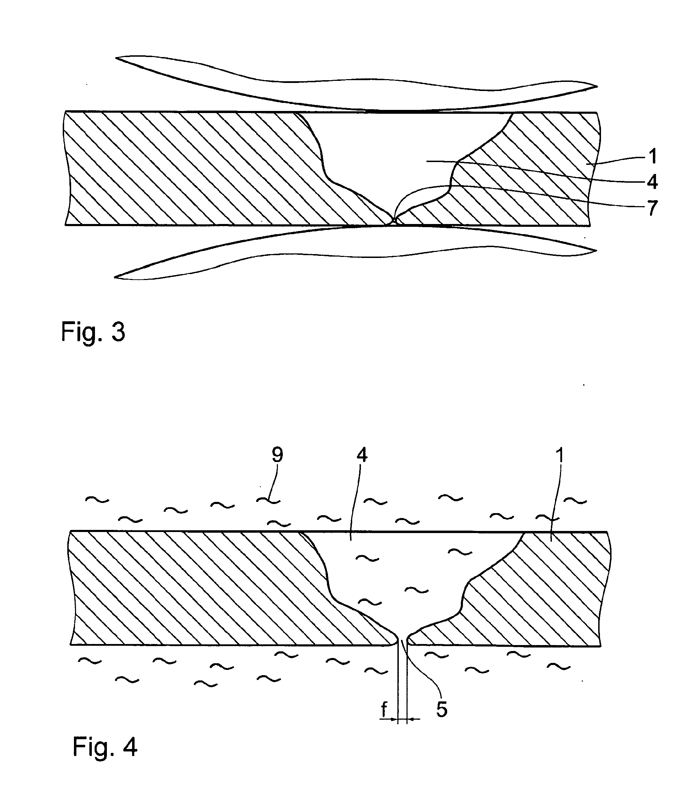

Der so behandelte Blechrohling 1 mit den Primäröffnungen 4 wird anschließend einer thermischen Behandlung durch Weichglühen bei etwa 1050°C über eine Zeitdauer von 60 Minuten unterzogen. Das Weichglühen kann in ein oder mehreren thermischen Behandlungsschritten ggf. unter einer Schutzgasatmosphäre aus einem Gemisch aus Wasserstoff und Stickstoff vorgenommen werden. Durch diese thermische Behandlung wird das Metallmaterial des Blechrohlings 1 so konditioniert, dass im nachfolgenden Walzschritt (Fig. 3) ein geschmeidiges Zugehen der Primäröffnungen 4 durch Reduzierung deren Weite mindestens auf eine Öffnungsweite herunter, die im Sub-Mikrometer-Bereich liegt. Im einfachsten Falle werden die Primäröffnungen 4 dabei bereits direkt zu den Filterporen 5 mit einer Öffnungsweite f von unter 1 µm umgeformt.

In der Regel wird allerdings die Primäröffnung 4 und insbesondere deren Deformationskragen 6 (Fig. 2) so stark umgeformt, dass eine für Filterzwecke zu kleine, undefinierte Restöffnung 7 verbleibt. Auch ein kompletter Verschluss der Primäröffnung 4 unter Zurücklassen einer trichterförmigen Vertiefung ist denkbar.

Um anschließend dieser Restöffnung 7 oder verschlossene Primäröffnung 4 auf ein definiertes Filterporenmaß zu bringen, wird der gewalzte, perforierte Blechrohling 1 einem chemischen Abtragungsprozess, wie beispielsweise einer elektrolytischen Entgratung oder einer Beizung unterzogen, wie dies in Fig. 4 angedeutet ist. Aufgrund dieser Abtragung öffnet sich die verschlossene Primäröffnung 4 bzw. die Restöffnung 7 (Fig. 3) auf eine Filterpore 5 mit einer Öffnungsweite f von unter 1 µm.

Bei dem elektrolytischen Entgratung handelt es sich dabei um eine elektrochemische Abtragung, die zur Beseitigung von metallischen Spitzen führt. Gemäß DIN 8580 ist das elektrolytische Entgratung den elektrisch abtragenden Fertigungsverfahren zugeordnet. Das zu behandelnde Werkstück liegt dabei an der Anode einer Gleichstromquelle an, der Elektrolyt - beispielsweise ein Gemisch aus hochkonzentrierter Phosphorsäure und Schwefelsäure mit Zusätzen - löst Teile des Werkstoffes bevorzugt im Bereich von Materialspitzen auf. An Werkstückkanten, wie sie sich im Bereich der Primär- bzw. Restöffnung 4, 7 bevorzugt finden lassen, wird damit ein schnellerer Abtrag und das definierte Öffnen der Filterpore 5 erreicht. Über den Wassergehalt des Elektrolyten wir die optimale Leitfähigkeit für das Abtragen eingestellt. Weitere beeinflussende Parameter sind die Stromdichte, die Elektrolyt-Temperatur und die Zeitdauer des Entgratungsprozesses.

Alternativ dazu kann durch Beizen des Blechrohlings eine dünne metallische Schicht an der Oberfläche abgetragen werden, sodass sich ebenfalls eine Vergrößerung der Restöffnung 7 bzw. ein Wiederöffnen der zugewalzten Primäröffnung 4 einstellt. Das Beizen nichtrostender Stähle wird üblicherweise mit einer Mischung von Salpeter- und Flusssäure vorgenommen.

## Patentansprüche

1. Verfahren zur Herstellung eines Oberflächenfilters, **gekennzeichnet durch** folgende Verfahrensschritte:
- Bereitstellen eines Blechrohlings (1) aus einem korrosionsbeständigen Metall, insbesondere aus Chrom-Nickel-Stahl,
- Einbringen von Primäröffnungen (4) in den Blechrohling (1) **durch** mechanisches Perforieren,
- thermisches Behandeln des perforierten Blechrohlings (1), und
- Walzen des perforierten Blechrohlings (1) zur Verkleinerung der Primäröffnungen (4) zu Filterporen (5) oder Restöffnungen (7) einer Öffnungsweite (f) von unter 1 µm.

2. Verfahren nach Anspruch 1, **dadurch gekennzeichnet, dass** der Blechrohling eine Dicke (D) von 0,10 mm bis 0,90 mm, vorzugsweise von etwa 0,5 mm aufweist.

3. Verfahren nach Anspruch 1 oder 2, **dadurch gekennzeichnet, dass** die Primäröffnungen (4) durch eine Dornenwalze (2) in den Blechrohling (1) eingebracht werden.

4. Verfahren nach einem der vorgenannten Ansprüche, **dadurch gekennzeichnet, dass** die Weite (W) der Primäröffnungen (4) zwischen etwa 0,010 mm und 0,090 mm liegt.

5. Verfahren nach einem der vorgenannten Ansprüche, **dadurch gekennzeichnet, dass** zur thermischen Behandlung der perforierte Blechrohling (1) einem Weichglühen bei über 1000°C, vorzugsweise bei etwa 1050°C unterzogen wird.

6. Verfahren nach Anspruch 5, **dadurch gekennzeichnet, dass** das Weichglühen unter einer Schutzgasatmosphäre, vorzugsweise einer Helium- oder Stickstoffatmosphäre erfolgt.

7. Verfahren nach einem der vorgenannten Ansprüche, **dadurch gekennzeichnet, dass** der gewalzte, perforierte Blechrohling (1) einem chemischen Abtragungsprozess zur Weitung der Restöffnungen (7) auf die Filterporen (5) unterzogen wird.

8. Verfahren nach Anspruch 7, **dadurch gekennzeichnet, dass** der gewalzte, perforierte Blechrohling (1) als chemischen Abtragungsprozess einer elektrolytischen Entgratung unterzogen wird.

9. Verfahren nach Anspruch 7, **dadurch gekennzeichnet, dass** der gewalzte, perforierte Blechrohling (1) als chemischen Abtragungsprozess einer Beizung unterzogen wird.

10. Oberflächenfilter aus einem Blechmaterial mit Filterporen (5) einer Öffnungsweite (f) von unter 1 µm, hergestellt mit einem Verfahren nach einem der vorgenannten Ansprüche.
